# EUROPEAN PATENT APPLICATION

(11) **EP 4 400 472 A1**
(43) Date of publication of application: **17.07.2024**
(21) Application number: 22872901.8
(22) Date of filing: 20.09.2022
(51) Int. Cl.: C01B 21/064, C08K 3/28, C08K 3/38

(54) **HEXAGONAL BORON NITRIDE FILLER POWDER**

(30) Priority: 27.09.2021 JP 2021157192
(71) Applicant: JFE Mineral & Alloy Company, Ltd., Tokyo 105-0014 (JP)
(72) Inventor: KURODA, Masaomi, Tokyo 105-0014 (JP); NAKAGAWA, Yumi, Tokyo 105-0014 (JP); KATAYAMA, Shigeyuki, Tokyo 105-0014 (JP); NABESHIMA, Seiji, Tokyo 105-0014 (JP); MIYAGUCHI, Masashi, Tokyo 105-0014 (JP)
(74) Representative: HGF
(86) International application number: PCT/JP2022/035036
(87) International publication number: WO 2023/048149

(57) **Abstract**

Provided is a hexagonal boron nitride powder for filler in which the elution amount of B is reduced even when the thickness of primary particles is increased and, as a result, high thermal conductivity is achieved. The hexagonal boron nitride powder for filler contains primary particles of hexagonal boron nitride and agglomerates of the primary particles, where the primary particles have an average equivalent circular diameter of 4 µm or more, the primary particles have an average thickness of 0.5 µm or more, the ratio of the average equivalent circular diameter to the average thickness is 1 or more and 10 or less, the average particle size is 5 µm or more and 100 µm or less, the bulk density is 0.5 g/cm³ or more and less than 1.0 g/cm³, and the elution amount of B is 60 ppm or less.

## Description

### TECHNICAL FIELD

This disclosure relates to a hexagonal boron nitride powder for filler.

### BACKGROUND

Hexagonal boron nitride powder (hereafter also referred to as h-BN powder) is used in various applications such as solid lubricants, glass mold release materials, insulation and heat dissipation materials, and cosmetic materials.

Conventionally, the hexagonal boron nitride powder is usually manufactured by, for example, reacting a boron compound such as boric acid and borate with a nitrogen compound such as urea and amine at relatively low temperatures to obtain a crude h-BN powder with low crystallinity, and then heating the obtained crude h-BN powder at high temperatures to grow crystals, as described in JP H09-295801 A (PTL 1).

A h-BN powder has a layered structure similar to graphite and has excellent properties as an electrical material including the following (1) to (3).
(1) High thermal (heat) conductivity and excellent heat dissipation properties.
(2) High electrical insulation properties and excellent dielectric strength.
(3) Lowest dielectric constant among ceramics.

An example of the use of h-BN powder that takes advantage of the above properties is as a filler. By adding a h-BN powder as a filler to a resin material such as epoxy resin and silicon rubber, sheets and tapes with excellent thermal conductivity (heat dissipation properties) and insulation properties can be obtained.

When using h-BN powder for such applications, the substitution ratio of the h-BN powder to the resin (filling properties) influences the thermal conductivity. Therefore, it is desirable to improve the filling properties of h-BN powder to obtain better thermal conductivity.

However, a conventional h-BN powder does not have sufficient filling properties, and the thermal conductivity of sheets and tapes made by adding the h-BN powder to a resin do not necessarily satisfy the required properties.

To solve the above problems, we have previously developed a new hexagonal boron nitride powder in which h-BN powder is agglomerated particles, and the size of primary particles, the ratio of average diameter/thickness of primary particles, the size of agglomerated particles, and other properties are specified within appropriate ranges, and we have described the hexagonal boron nitride powder in JP 2007-308360 A (PTL 2).

However, as insulating sheets have become thinner in recent years, it is desired to minimize the presence of conductive substances that deteriorate insulation properties. In addition, high powder strength is required to prevent agglomerated particles from being destroyed when a boron nitride powder is mixed with a resin. Further, if there are many pores in a material obtained by mixing a boron nitride powder and a resin, the thermal conductivity and dielectric strength of the material are deteriorated, so it is also required to reduce the number of pores.

To solve the above problems, we have previously developed a new hexagonal boron nitride powder in which the diameter and thickness of primary particles, the ratio of average diameter/thickness, the size of agglomerated particles, and other properties are specified within appropriate ranges, and the upper limit of conductive substances as impurities is specified, and we have described the hexagonal boron nitride powder in JP 2011-98882 A (PTL 3).

### CITATION LIST

### Patent Literature

PTL 1: JP H09-295801 A
PTL 2: JP 2007-308360 A
PTL 3: JP 2011-98882 A

### SUMMARY

### (Technical Problem)

According to the technology described in PTL 3, it is possible to obtain a hexagonal boron nitride powder with excellent insulation properties, high powder strength, excellent thermal conductivity, and dielectric strength.

However, it has been found that when this hexagonal boron nitride powder is used as a filler, there are problems described below.

To increase the thermal conductivity of the hexagonal boron nitride powder as a filler, it is desirable to increase the thickness of primary particles

(increase the ratio of thickness to diameter) to reduce voids in aggregated particles and increase the density.

However, when the thickness of primary particles is increased, the amount of B eluted from the hexagonal boron nitride powder increases. As a result, the desired thermal conductivity cannot be obtained.

It could thus be helpful to provide a hexagonal boron nitride powder for filler in which the elution amount of B is reduced even when the thickness of primary particles is increased and, as a result, high thermal conductivity is achieved.

### (Solution to Problem)

The following provides a description of the circumstances that led to the present disclosure.

As a result of intensive studies, we found that the elution of B from boron nitride powder occurs mainly at the end faces of hexagonal boron nitride particles having a scale-like shape. We then found that by appropriately controlling the conditions for manufacturing hexagonal boron nitride powder, the crystal structure of the end faces can be stabilized, and the elution of B can be reduced even when the thickness of primary particles is increased.

The present disclosure is based on the findings described above. We thus provide the following.
1. A hexagonal boron nitride powder for filler, consisting of primary particles of hexagonal boron nitride and agglomerates of the primary particles, wherein
   the primary particles have an average equivalent circular diameter of 4 µm or more,
   the primary particles have an average thickness of 0.5 µm or more,
   a ratio of the average equivalent circular diameter to the average thickness is 1 or more and 10 or less,
   an average particle size is 5 µm or more and 100 µm or less,
   a bulk density is 0.5 g/cm³ or more and less than 1.0 g/cm³, and
   an elution amount of B is 60 ppm or less.

### (Advantageous Effect)

According to the present disclosure, an increase in the elution amount of B can be effectively suppressed even when the thickness of primary particles of hexagonal boron nitride is increased. As a result, high thermal conductivity can be achieved.

### DETAILED DESCRIPTION

The following describes the present disclosure in detail.

### [Primary particle]

The hexagonal boron nitride powder for filler of the present disclosure is a hexagonal boron nitride powder containing primary particles of hexagonal boron nitride and agglomerates of the primary particles. In the present disclosure, the shape of the primary particle is not particularly limited if the average equivalent circular diameter and the average value of the ratio of the equivalent circular diameter to the thickness satisfy the conditions described below, respectively. However, because hexagonal boron nitride has a graphite-like crystal structure as described above, the primary particle may typically have a scale-like (plate-like) structure. As used herein, the "scale-like" includes a case where the particle has a twin structure. Further, the "agglomerates of primary particles" is defined as secondary particles in which two or more primary particles are present in an agglomerated state.
Average equivalent circular diameter of primary particles: 4 µm or more
Average thickness of primary particles: 0.5 µm or more

In the present disclosure, the average equivalent circular diameter of the primary particles is 4 µm or more, and the average thickness of the primary particles is 0.5 µm or more. This can increase the density of the agglomerates. As a result, it is possible to improve the filling properties when adding the hexagonal boron nitride powder as a filler to a resin, and to improve the thermal conductivity. The average equivalent circular diameter of the primary particles is preferably 5 µm or more. The average thickness of the primary particles is preferably 0.8 µm or more and more preferably 0.9 µm or more.

According to our studies, in a conventional hexagonal boron nitride powder, the amount of B eluted from the hexagonal boron nitride powder increases as the thickness of the primary particles increases. When the elution amount of B increases, the mixing state of the hexagonal boron nitride powder and a resin deteriorates, and the adhesion deteriorates. As a result, the desired thermal conductivity cannot be obtained even if the thickness of the primary particles is increased. However, the present disclosure uses the manufacturing method described below, so that the elution of boron from the end faces of hexagonal boron nitride particles can be suppressed. As a result, the thickness of the primary particles can be 0.5 µm or more without increasing the elution amount of B.

On the other hand, the upper limit of the average equivalent circular diameter of the primary particles is not particularly limited, but an excessively large average equivalent circular diameter increases the time required for firing and decreases the productivity. Therefore, the average equivalent circular diameter is preferably 20 µm or less, more preferably 15 µm or less, and even more preferably 13 µm or less.

Similarly, the upper limit of the average thickness of the primary particles is not particularly limited, but an excessively large average thickness increases the time required for firing and decreases the productivity. Therefore, the average thickness is preferably 10 µm or less, more preferably 5.0 µm or less, even more preferably 2.0 µm or less, and still more preferably 1.7 µm or less.

The equivalent circular diameter and thickness of the primary particle can be measured by image interpretation of the hexagonal boron nitride powder images taken by a scanning electron microscope (SEM). In other words, the equivalent circular diameter and thickness of the primary particle in the present disclosure are defined as the apparent equivalent circular diameter and thickness in a field of view of the scanning electron microscope. More specifically, the measurement can be performed with the method described in the EXAMPLES section.

### Ratio of average equivalent circular diameter to average thickness: 1 or more and 10 or less

In the present disclosure, the ratio of the average equivalent circular diameter to the average thickness of the primary particles is 1 or more and 10 or less. This can increase the density of the agglomerates and the filling rate in a resin sheet. In one embodiment of the present disclosure, the ratio of the average equivalent circular diameter to the average thickness of the primary particles may be 1.0 or more and 10.0 or less. The ratio of the average equivalent circular diameter to the average thickness of the primary particles is preferably 3.0 or more and more preferably 5.0 or more. The ratio of the average equivalent circular diameter may be 9.5 or less, or 9.0 or less. The value of the ratio can be obtained by dividing the average equivalent circular diameter of the primary particles by the average thickness of the primary particles.
Average particle size: 5 µm or more and 100 µm or less
Bulk density: 0.5 g/cm³ or more and less than 1.0 g/cm³

In the present disclosure, the average particle size of the hexagonal boron nitride powder is 5 µm or more and 100 µm or less, and the bulk density of the hexagonal boron nitride powder is 0.5 g/cm³ or more and less than 1.0 g/cm³. This can improve the filling properties (filling density) when adding the hexagonal boron nitride powder as a filler to a resin and improve the thermal conductivity. In one embodiment of the present disclosure, the bulk density may be 0.50 g/cm³ or more and less than 1.00 g/cm³.

When the average particle size is less than 5 µm, the adhesion between a resin and the boron nitride particles is poor. On the other hand, when the average particle size is more than 100 µm, the particles may become foreign substances in a resin sheet and lead to destruction of the sheet. The average particle size is preferably 10 µm or more and more preferably 20 µm or more. The average particle size is preferably 80 µm or less and more preferably 70 µm or less.

When the bulk density is less than 0.5 g/cm³, the amount that can be added to a resin decreases, and the filling properties to the resin deteriorate. On the other hand, when the bulk density is 1.0 g/cm³ or more, the filling properties are improved, but the dispersibility when mixing with a resin is deteriorated, rendering it difficult to uniformly disperse the powder in the resin. The bulk density is preferably 0.60 g/cm³ or more. The bulk density is preferably 0.95 g/cm³ or less.

The average particle size of the hexagonal boron nitride powder of the present disclosure refers to the volume-based median diameter D₅₀ in a particle size distribution measured with a laser diffraction scattering method. Therefore, the average particle size is the average particle size of the entire hexagonal boron nitride powder including both primary particles and agglomerates (secondary particles). More specifically, the measurement can be performed with the method described in the EXAMPLES section.

The bulk density can be obtained by filling and tapping the hexagonal boron nitride powder into a container, and then determining the bulk density with the volume and weight of the hexagonal boron nitride powder. More specifically, the measurement can be performed with the method described in the EXAMPLES section.

The average particle size and bulk density of the hexagonal boron nitride powder can be adjusted by controlling the conditions for grinding and classifying the hexagonal boron nitride powder after decarburization treatment as described below.

### Elution amount of B: 60 ppm or less

In a conventional hexagonal boron nitride powder, when the thickness of primary particles is increased, the amount of B eluted from BN particles increases, resulting in problems such as unstable resin hardness after mixing the powder with a resin, and deteriorated adhesion between a resin and BN. In contrast, the present disclosure, by employing the manufacturing method described below, has made it possible to reduce the elution amount of B to 60 ppm or less. The elution amount of B is preferably 50 ppm or less. On the other hand, the lower limit may be 0 ppm because the elution amount of B is preferably as low as possible. However, from the viewpoint of industrial production, the elution amount of B may be 10 ppm or more, or 15 ppm or more.

The elution amount of B of the hexagonal boron nitride powder can be determined by adding 2.5 g of the hexagonal boron nitride powder to be measured to a mixed solvent of 30 ml of water and 10 ml of ethanol, heating and stirring the mixture at 50 °C for 60 minutes, then filtering the mixture through a membrane filter with a pore size of 0.2 µm, and measuring the B content in the filtrate using the ICP emission spectrochemical analysis method specified in JIS K 0116: 2014. More specifically, the measurement can be performed with the method described in the EXAMPLES section.

The percentage of the agglomerates in the hexagonal boron nitride powder of the present disclosure is not particularly limited. However, from the viewpoint of further improving the performance as a filler, the percentage of fine powder formed by, for example, destruction of the agglomerates is preferably low. Specifically, when the particle size distribution of the hexagonal boron nitride powder is measured with the laser diffraction scattering method, the percentage of particles with a particle size of 10 µm or less in the entire hexagonal boron nitride powder is preferably 30 % or less by volume and more preferably 20 % or less by volume. The lower limit of the percentage of particles with a particle size of 10 µm or less in the entire hexagonal boron nitride powder is not particularly limited, and it may be 0 % by volume.

The following describes suitable manufacturing processes of the hexagonal boron nitride powder according to the present disclosure, as well as specific methods of increasing the thickness of the primary particles and reducing the elution amount of B.

The hexagonal boron nitride powder of the present disclosure can be manufactured by firing boron carbide (B₄C) in a nitrogen atmosphere, and then performing decarburization treatment, and, if necessary, followed by grinding, classifying, and other treatments.

The boron carbide can be any boron carbide without limitation. Generally, commercially available boron carbide may be used. Boron carbide can also be obtained from boric acid (H₃BO₃) by the reaction of the following formula (1). That is, boric acid is reacted with a carbon-containing material at high temperatures in a non-oxidizing atmosphere, and then the resulting product is ground and classified to obtain a boron carbide powder.

4H₃BO₃ + 7C → B₄C + 6H₂O + 6CO (1)

The boron carbide powder is fired in a nitrogen atmosphere (nitriding treatment) to obtain a BN powder by the reaction of the following formula (2).

(1/2)B₄C + N₂ → 2BN + (1/2)C (2)

When the nitrogen partial pressure during the nitriding treatment is less than 0.005 MPa, the nitriding reaction progresses slowly, and the treatment takes a long time. Therefore, the nitrogen partial pressure during the nitriding treatment is set to 0.005 MPa or more. On the other hand, the upper limit of the nitrogen partial pressure is not particularly limited, but the nitrogen partial pressure may generally be 5 MPa or less due to equipment constraints.

Similarly, when the temperature of the nitriding treatment is lower than 1800 °C, the nitriding reaction progresses slowly, and the treatment takes a long time. Therefore, the temperature of the nitriding treatment is set to 1800 °C or higher and preferably 1900 °C or higher. On the other hand, when the temperature exceeds 2200 °C, a reverse reaction occurs, which in turn decreases the reaction rate. Therefore, the temperature of the nitriding treatment is set to 2200 °C or lower and preferably 2100 °C or lower.

A product obtained by the nitriding treatment contains not only boron nitride but also carbon. Therefore, the product is subjected to decarburization treatment to remove mixed C. The decarburization treatment is performed by mixing the product with diboron trioxide and/or its precursor (hereinafter referred to as "diboron trioxide and the like") and heating the mixture in a nitrogen atmosphere. In the decarburization treatment, C contained in the product is removed as CO (gas), and BN is formed from carbonized diboron trioxide and the like by the reaction of the following formula (3).

2BN + (1/2)C + (1/6)B₂O₃ + (1/6)N₂ → (7/3)BN + (1/2)COT (3)

The precursor of diboron trioxide is a boron compound that can be converted into diboron trioxide by heating, and specific examples thereof include ammonium salts of boric acid, orthoboric acid, metaboric acid, and tetraboric acid. Among diboron trioxide and its precursors, diboron trioxide is particularly preferred.

The product and diboron trioxide and the like to be subjected to the decarburization treatment can be mixed with any method. For example, although it is possible to perform wet mixing by adding a solvent to a ball mill, it is preferable to use a dry mixer such as a V-shaped blender. The mixing is performed until the mixture is uniform. Specifically, it is sufficient when the mixture becomes a homogeneous gray color visually.

The reaction of the formula (3) proceeds at 1500 °C or higher. To evaporate and remove diboron trioxide as described below, the temperature during the decarburization treatment is set to 1800 °C or higher and preferably 1900 °C or higher. On the other hand, the upper limit of the temperature is not particularly limited, but it is usually 2200 °C or lower and preferably 2100 °C or lower.

To allow the reaction to proceed sufficiently, the time for the decarburization treatment is set to 6 hours or longer and preferably 12 hours or longer.

By mixing the product with an appropriate amount of diboron trioxide and the like and then performing decarburization treatment under the above conditions, the amount of carbon contained in the product can be reduced to, for example, 0.2 % or less by mass.

The concept and specific means of increasing the thickness of the primary particles in the present disclosure are as follows.

### [Concept of increasing thickness]

We have studied the growth of hexagonal boron nitride particles in the decarburization treatment. As a result, we found that an excess of diboron trioxide and the like promote the growth of hexagonal boron nitride particles in the plane direction and, as a result, suppresses their growth in the thickness direction. The reason is considered as follows. When diboron trioxide and the like are in excess, they will remain even after C is removed by the reaction of the formula (3), and boron nitride particles grow by contacting and combining with each other in the liquid phase of the remaining diboron trioxide and the like. In this case, hexagonal boron nitride tends to combine with each other at the highly active end faces due to the crystal structure, resulting in preferential growth in the plane direction.

Therefore, to reduce the ratio of the equivalent circular diameter to the thickness of the primary particles, it is effective to suppress growth in the plane direction by reducing excess diboron trioxide and the like.

Therefore, when the product (BN, C) obtained by firing boron carbide in a nitrogen atmosphere is mixed with diboron trioxide and the like and fired to remove the by-product carbon, it is important to add a suitable amount of diboron trioxide and the like so that the amount of diboron trioxide and the like mixed with the total amount of the product (BN, C) obtained by firing boron carbide in a nitrogen atmosphere corresponds to the reaction of the formula (3), and then perform decarburization. In other words, it is important to reduce excess diboron trioxide and the like as much as possible and then perform decarburization.

### [Specific means of increasing thickness]

As described above, the reaction in the decarburization treatment can be expressed by the formula (3). According to the left side of the formula, the amount (stoichiometric equivalent) of diboron trioxide and the like required for decarburizing 1 part by mass of C is approximately 2 parts by mass in terms of B₂O₃ (see the following formula (4)).

(1/2)C: (1/6)B₂O₃ ≒ 1/2 × 12: 1/6 × 70 ≒ 1: 2 (4)

When the amount of diboron trioxide and the like used in the decarburization treatment is less than 1.0 times the stoichiometric equivalent, decarburization is insufficient, and C remains. Therefore, the amount of diboron trioxide and the like used in the decarburization treatment is set to 1.0 times the stoichiometric equivalent or more. On the other hand, when the amount of diboron trioxide and the like used in the decarburization treatment is more than 3.2 times the stoichiometric equivalent, excess diboron trioxide remains after decarburization. As a result, the average value of the ratio of the equivalent circular diameter to the thickness of the primary particles is not in the desired range. Therefore, the amount of diboron trioxide and the like used in the decarburization treatment is set to 3.2 times the stoichiometric equivalent or less and preferably 2.4 times the stoichiometric equivalent or less.

It is also effective to raise the temperature of the decarburization treatment to 1800 °C or higher to increase the evaporation rate of diboron trioxide after completion of decarburization and reduce excess diboron trioxide and the like. Therefore, the temperature of the decarburization treatment is set to 1800 °C or higher and preferably 1900 °C or higher, which is higher than the boiling point of boron trioxide.

Further, by performing depressurization treatment after the decarburization treatment, the evaporation rate of diboron trioxide and the like can be increased. As a result, excess diboron trioxide and the like can be reduced, growth in the long-side length direction can be suppressed, and growth in the thickness direction can be promoted.

Next, the concept and specific means of reducing the elution of B will be explained.

### [Concept of reducing elution of B]

In a hexagonal boron nitride powder where the thickness of primary particles is large, the elution amount of B increases compared to a hexagonal boron nitride powder where the thickness of primary particles is small. This is because, as described above, the elution of B occurs mainly at the end faces of hexagonal boron nitride particles that are primary particles.

According to our studies, it is presumed that the amount of B that is hydrolyzed and eluted increases in BN where the end faces of primary particles are unstable in terms of crystal structure. Therefore, to reduce the elution amount of B of primary BN particles with a large thickness, it is considered effective to reduce the amount of BN with an unstable crystal structure that is present in large quantities at the end faces and to stabilize BN. Although it is not clearly known what kind of BN is unstable in terms of crystal structure, it is presumed to be one where a OH group is bonded to B and a H group is bonded to N in the terminal structure. It is then presumed that the BN with an unstable crystal structure reacts with H₂O to form NH₃, resulting in a structure that is easily hydrolyzed.

### [Specific means of reducing elution of B]

To reduce the elution amount of B, it is necessary to stabilize the end faces of primary particles of BN in terms of crystal structure to reduce the amount of B hydrolyzed and eluted, as described above. We conducted numerous experiments and studies to realize this.

As a result, we found that, although the reason is unknown, by setting the cooling rate after decarburization treatment to 50 °C/min or less when the furnace temperature is in a range of 1600 °C or lower, and by further setting the temperature at which BN is taken out of the furnace after decarburization treatment to 500 °C or lower, it is possible to stabilize the crystal structure at the end faces of primary particles and to reduce the elution amount of B. The cooling rate is preferably 20 °C/min or less, more preferably 10 °C/min or less, and even more preferably 5 °C/min or less. Setting the temperature when taken out of the furnace to 500 °C or lower means that the boron nitride powder is taken out of the furnace after the temperature of the boron nitride powder is decreased to 500 °C or lower. The temperature when taken out of the furnace is preferably 300 °C or lower and more preferably 200 °C or lower. The temperature refers to the furnace temperature, which can be measured by thermocouples or infrared radiation thermometers, although the measurement method is not limited.

It is considered that, when the cooling rate after decarburization treatment is high and BN is taken out of the furnace at a high temperature exceeding 500 °C and rapidly cooled as in the past, the end faces of primary particles of BN become increasingly unstable in terms of crystal structure, resulting in an increased elution amount of B.

On the other hand, in the present disclosure, the cooling rate after decarburization treatment is lowered and the temperature at which BN is taken out of the furnace is lowered to stabilize the end faces of primary particles in terms of crystal structure and to reduce the elution amount of B as described above.

The hexagonal boron nitride obtained by the above processes is subjected to grinding and classifying as necessary to obtain the desired bulk density and average particle size.

### EXAMPLES

Hexagonal boron nitride powders were produced by the following procedure, and their properties were evaluated.

Commercially available boron carbide powder with a purity of 98 % by mass was sieved through a sieve having an opening size of 44 µm, and 101.8 g of the boron carbide powder that had passed through the sieve was used as a raw material powder. The raw material powder was put into a carbon crucible with an inner diameter of 90 mm and a height of 100 mm and fired in a nitrogen atmosphere (nitriding treatment) while maintaining the furnace pressure. The treatment was performed at a temperature of 2000 °C for 15 hours.

In some examples, depressurization treatment was performed after the nitriding treatment. Specifically, during the cooling after the 15-hour nitriding treatment was completed, depressurization treatment in which the furnace pressure was maintained at 60 kPa started when the furnace temperature reached 1800 °C. The holding time of the depressurization treatment was 3 hours.

Next, 69.3 g of the product obtained by the firing was collected and mixed with 35.2 g of commercially available diboron trioxide to obtain a powder mixture. The mixing was performed by rotating at 1 Hz for 30 minutes using a V-shaped blender with an internal volume of 1 L.

The obtained powder mixture was charged into a carbon crucible with an inner diameter of 90 mm and a height of 100 mm, and decarburization treatment was performed at 2000 °C for 10 hours in a nitrogen stream to obtain a second fired product. The cooling rate after decarburization treatment, and the temperature when taken out of the furnace were listed in Table 1. In some examples, after the decarburization treatment, depressurization treatment was performed where the furnace temperature was 2000 °C and the furnace pressure was maintained at 60 kPa for 3 hours.

The second fired product thus obtained was a white agglomerate. After grinding, the white agglomerate was subjected to X-ray diffraction and was confirmed to be almost completely h-BN.

### (Evaluation of primary particles)

Next, the average equivalent circular diameter and average thickness of the primary particles were measured for each of the obtained hexagonal boron nitride powders. Specifically, the hexagonal boron nitride powder was imaged using a SEM at a magnification of 5000 times. Then, 5 to 10 particles whose shape could be confirmed as a primary particle were randomly selected from the obtained image, their apparent equivalent circular diameter and thickness in a field of view of the microscope were determined by image interpretation, and the average value of each was calculated. The ratio of the average equivalent circular diameter to the average thickness of the primary particles was calculated with the obtained values. The results are also listed in Table 1.

### (Evaluation of hexagonal boron nitride powder)

Further, the average particle size, bulk density, and elution amount of B of each of the obtained hexagonal boron nitride powders were evaluated by the following procedure. The results are also listed in Table 1.

### - Average particle size

The average particle size of the hexagonal boron nitride powder was measured with a dry method using a Mastersizer laser diffraction particle size distribution analyzer manufactured by Malvern Panalytical. In the measurement, the hexagonal boron nitride powder was introduced into a cell at 0.1 bar and then irradiated with a laser beam, and the resulting light scattering pattern was analyzed to obtain a particle size distribution. The refractive index of boron nitride was 1.7. The volume-based median diameter D₅₀ in the obtained particle size distribution was defined as the average particle size.

### - Bulk density

The obtained hexagonal boron nitride powder was gently filled into a 100-ml polypropylene graduated cylinder to a volume of 100 ml. Next, the polypropylene graduated cylinder was attached to a tapping machine and tapped 216 times. After tapping, the bulk density (g/ml) was determined with the volume (ml) of the hexagonal boron nitride powder inside the polypropylene graduated cylinder and the weight (g) of the hexagonal boron nitride powder.

### - Elution amount of B

The elution amount of B of each of the obtained hexagonal boron nitride powders was measured by the following procedure. First, 2.5 g of the hexagonal boron nitride powder to be measured was added to a mixed solvent of 30 ml of water and 10 ml of ethanol, and the mixture was heated and stirred at 50 °C for 60 minutes and then filtered using a barrel-type filter equipped with a membrane filter having a pore diameter of 0.2 µm and a diameter of 47 mm. Next, the B content in the filtrate was measured using the ICP emission spectrochemical analysis method specified in JIS K 0116: 2014 in accordance with Japanese Standards of Quasi-drug Ingredients to obtain the elution amount of B. In the measurement, all the instruments used were made of quartz or resin to prevent contamination of B.

### (Thermal conductivity)

To evaluate the performance of the obtained hexagonal boron nitride powder as a filler, a resin sheet containing the hexagonal boron nitride powder was prepared by the following procedure, and its thermal conductivity was evaluated.

First, the hexagonal boron nitride powder and 20 g of an epoxy resin containing a curing agent were added to 40 g of methyl cellosolve as a solvent, and the mixture was uniformly dispersed by kneading in a rotary ball mill for 60 minutes. The amount of the hexagonal boron nitride powder added was 60 % by mass of the total weight excluding solvent. Bis-F liquid-type epoxy resin jER 807 (manufactured by Mitsubishi Chemical Corporation) was used as the epoxy resin, and modified alicyclic amine grade epoxy resin curing agent jERCURE 113 (manufactured by Mitsubishi Chemical Corporation) was used as the curing agent.

Next, the resin containing the hexagonal boron nitride powder after kneading was applied to a polyimide film using a hand coater so that the film thickness was 200 µm. After drying the coated resin at 130 °C for 10 minutes, two pieces were stacked so that the resin surfaces were in contact with each other, and hot press forming was performed at a temperature of 170 °C and a pressure of 80 kgf/cm² for 30 minutes to obtain a resin sheet.

A test piece with a diameter of 10 mm and a thickness of 2 mm was cut out from the obtained resin sheet, and the thermal conductivity of the test piece was measured by laser flash.

According to the results listed in Table 1, it is understood that the hexagonal boron nitride powder that satisfied the conditions of the present disclosure had excellent thermal conductivity. The reasons for that are considered to be the improved filling properties, adhesion, and contact resistance of the hexagonal boron nitride powder to the resin. In the hexagonal boron nitride powder of the present disclosure, the elution amount of B is reduced even when the average thickness of the primary particles is increased to 0.5 µm or more, and as a result, high thermal conductivity can be achieved. Therefore, the hexagonal boron nitride powder of the present disclosure is extremely suitable as a filler for adding to insulating sheets and other materials.

### [Table 1]

**Table 1**

| No. | Manufacturing conditions | | | | Primary particle | | | Hexagonal boron nitride powder | | | Resin sheet | Remarks |
|---|---|---|---|---|---|---|---|---|---|---|---|---|
| | Depressurization treatment after nitriding treatment | Cooling rate after decarburization (°C/min) | Temperature when taken out of furnace (°C) | Depressurization treatment after decarburization treatment | Average equivalent circular diameter (µm) | Average thickness (µm) | Average equivalent circular diameter/ average thickness | Average particle size (µm) | Bulk density (g/cm³) | Elution amount of B (ppm) | Thermal conductivity (W/mK) | |
| 1 | Not performed | 40 | 480 | Not performed | 10 | 1.2 | 8.3 | 45 | 0.75 | 42 | 12.8 | Example |
| 2 | Not performed | 20 | 480 | Not performed | 6 | 0.8 | 7.5 | 62 | 0.90 | 34 | 15.2 | Example |
| 3 | Not performed | 40 | 250 | Not performed | 8 | 1.0 | 8.0 | 34 | 0.83 | 30 | 13.5 | Example |
| 4 | Not performed | 15 | 150 | Not performed | 7 | 1.2 | 5.8 | 52 | 0.87 | 15 | 18.3 | Example |
| 5 | Not performed | 40 | 550 | Not performed | 8 | 1.0 | 8.0 | 46 | 0.78 | 72 | 8.4 | Comparative Example |
| 6 | Not performed | 60 | 480 | Not performed | 7 | 0.9 | 7.8 | 38 | 0.94 | 95 | 7.5 | Comparative Example |
| 7 | Not performed | 60 | 550 | Not performed | 10 | 1.3 | 7.7 | 57 | 0.72 | 123 | 6.5 | Comparative Example |
| 8 | Not performed | 40 | 480 | Performed | 8 | 1.4 | 5.7 | 42 | 0.80 | 38 | 12.6 | Example |
| 9 | Performed | 40 | 480 | Not performed | 6 | 0.8 | 7.5 | 50 | 0.85 | 46 | 13.4 | Example |
| 10 | Not performed | 40 | 150 | Not performed | 5 | 0.7 | 7.1 | 26 | 0.92 | 22 | 13.8 | Example |
| 11 | Not performed | 40 | 650 | Not performed | 8 | 0.9 | 8.9 | 34 | 0.82 | 85 | 7.5 | Comparative Example |
| 12 | Not performed | 10 | 480 | Not performed | 9 | 0.9 | 10.0 | 42 | 0.72 | 30 | 15.8 | Example |
| 13 | Not performed | 55 | 480 | Not performed | 10 | 1.0 | 10.0 | 46 | 0.75 | 82 | 8.5 | Comparative Example |
| 14 | Not performed | 20 | 250 | Not performed | 14 | 1.6 | 8.8 | 45 | 0.70 | 35 | 16.2 | Example |
| 15 | Not performed | 20 | 250 | Not performed | 12 | 1.8 | 6.7 | 56 | 0.68 | 44 | 17.5 | Example |
| 16 | Not performed | 3 | 150 | Not performed | 8 | 1.0 | 8.0 | 45 | 0.82 | 20 | 16.2 | Example |
| 17 | Not performed | 5 | 250 | Not performed | 6 | 0.8 | 7.5 | 36 | 0.85 | 25 | 15.8 | Example |
| 18 | Not performed | 20 | 250 | Performed | 5 | 0.7 | 7.1 | 62 | 0.90 | 54 | 12.8 | Example |
| 19 | Not performed | 20 | 250 | Not performed | 8 | 1.0 | 8.0 | 38 | 0.88 | 58 | 12.0 | Example |
| 20 | Not performed | 20 | 250 | Not performed | 3 | 0.8 | 3.8 | 15 | 0.95 | 75 | 6.2 | Comparative Example |
| 21 | Not performed | 20 | 250 | Not performed | 5 | 0.4 | 125 | 42 | 0.65 | 35 | 8.7 | Comparative Example |
| 22 | Not performed | 20 | 250 | Not performed | 5 | 5.8 | 0.9 | 33 | 0.70 | 140 | 6.8 | Comparative Example |
| 23 | Not performed | 20 | 250 | Not performed | 10 | 0.9 | 11.1 | 52 | 0.65 | 62 | 9.2 | Comparative Example |
| 24 | Not performed | 20 | 250 | Not performed | 4 | 0.5 | 8.0 | 4 | 0.40 | 125 | 6.1 | Comparative Example |
| 25 | Not performed | 20 | 250 | Not performed | 15 | 1.6 | 9.4 | 110 | 0.50 | 112 | 7.8 | Comparative Example |
| 26 | Not performed | 20 | 250 | Not performed | 8 | 0.5 | 16.0 | 48 | 0.48 | 28 | 6.8 | Comparative Example |
| 27 | Not performed | 20 | 250 | Not performed | 4 | 1.5 | 2.7 | 30 | 1.10 | 38 | 6.5 | Comparative Example |

## Claims

1. A hexagonal boron nitride powder for filler, consisting of primary particles of hexagonal boron nitride and agglomerates of the primary particles, wherein
the primary particles have an average equivalent circular diameter of 4 µm or more,
the primary particles have an average thickness of 0.5 µm or more,
a ratio of the average equivalent circular diameter to the average thickness is 1 or more and 10 or less,
an average particle size is 5 µm or more and 100 µm or less,
a bulk density is 0.5 g/cm³ or more and less than 1.0 g/cm³, and
an elution amount of B is 60 ppm or less.
